# EUROPEAN PATENT SPECIFICATION

(11) **EP 1 444 884 B1**
(45) Date of publication and mention of the grant of the patent: **19.07.2006**
(21) Application number: 04001706.3
(22) Date of filing: 27.01.2004
(51) Int. Cl.: A01G 9/02, G09F 3/20

(54) **Plant pot device**
Vorrichtung für einen Blumentopf
Dispositif pour un pot de fleur

(30) Priority: 05.02.2003 NO 20030569
(43) Date of publication of application: 11.08.2004
(73) Proprietor: Grimstad Planteskole AS, 4885 Grimstad (NO)
(72) Inventor: Frivold, Erik, 4885 Grimstad (NO); Kristensen, Anders, 4885 Grimstad (NO)
(74) Representative: Wagner, Karl Heinz

(56) References cited:
- WO-A-01/29806
- NL-C- 1 011 013
- PATENT ABSTRACTS OF JAPAN vol. 2002, no. 06, 4 June 2002 (2002-06-04) & JP 2002 034344 A (ANDOU CHEMICAL KK), 5 February 2002 (2002-02-05)
- PATENT ABSTRACTS OF JAPAN vol. 2000, no. 21, 3 August 2001 (2001-08-03) & JP 2001 103842 A (NAKAYAMA YOSHINORI), 17 April 2001 (2001-04-17)

## Description

This invention relates to a device in connection with a plant pot, more particularly a labelling flag attached to the periphery of the plant pot in such a way that in a lower trans-port position it does not occupy any space, nor can it be damaged, whereas in an upper exposure position it is easily visible. The labelling flag and the plant pot are also arranged in such a way that an attached labelling flag cannot be removed without being damaged. Thereby the risk of unintended swapping of price markings, among other things, is reduced.

Ordinary product labelling of pot plants is done, according to the prior art, by labelling flags with product information etc. being stuck into the upper earth layer in the pot, being inserted into a slot in the pot as disclosed e.g. in WO-A-129806 or being attached to the plant. A self-adhesive label can also be put on the external wall of the pot. The price marking of the distributive trades is done on the same flag/label.

Current labelling systems often results in the labelling disappearing, as the label falls off in the handling of the pot plant. The labelling may also damage the labelled plant or an adjacent plant. Labels may be swapped by mistake when missing labelling is being corrected, or a customer may swap different price groups in order to achieve a more favourable price. Labels may also easily be damaged when the pot plants are being handled.

The invention has as its object to remedy the drawbacks of the prior art.

The object is realised through the features defined in the description below and in the following Claims.

A plant pot, preferably moulded from a plastics material, is at an upper portion provided with a projection in accordance with the prior art known as *per se,* which is arranged to make a pot wall sufficiently form-stable. The projection may have the form of an annular and approximately horizontal portion projecting outwards from the pot wall, preferably with a uniform width round the entire periphery of the pot. From the outer edge of the projection an edge portion extends upwards in approximately the same direction as the pot wall. Internally the edge portion may preferably be braced with several ribs extending inwards in an approximately radial direction. At its top the edge portion preferably terminates in a small rim projecting approximately horizontally outwards from the inner wall surface of the edge portion.

In one or more sectors a slot following the course of the pot periphery penetrates the projection. An inner wall surface extending upwards as a direct extension of the pot wall surrounds the slot, and two side walls extending vertically upwards from the projection, placed approximately perpendicular to the direction of the pot periphery. The walls surrounding the slot are preferably of a height equal to that of the edge portion of the projection. The purpose of the slot is to provide attachment for a labelling flag. The surrounding sidewalls and the inner wall surface prevent the growth medium from contacting the slot or the labelling flag.

The edge portion of the projection is advantageously provided with a first recess, for example of a semicircular shape, positioned with its centre within the two surrounding sidewalls of the slot. The surrounding inner wall surface of the slot may advantageously be provided with a corresponding second recess located just across from the first recess. The purpose of the recess(es) is to provide access for the upper end portion of the labelling flag to be gripped when the labelling flag is to be pulled up from a transport position into an exposure position.

The slot comprises devices being arranged, firstly, to ensure, in cooperation with the shape of the labelling flag, that from a pulled-down first position (transport position) the labelling flag cannot be pulled further down and be removed from the pot, and, secondly, to ensure that when in a pulled-up second position (exposure position) the labelling flag cannot be pulled further upwards or downwards without the labelling flag being damaged.

In an alternative design, the plant pot may be provided with, for example, a non-closed slot formed by guide means positioned on the wall of the plant pot, preferably on the outside of the pot. The guide means may enclose the slot partially or completely and have a form suitable for holding the labelling flag in a desired position.

The labelling flag has a height and width adapted to the height and slot length of the pot. A lower portion of the labelling flag is arranged to prevent the labelling flag from being pulled up and out of the slot of the plant pot. For use in plant pots of a circular bottom area, the labelling flag is advantageously curved with a curvature corresponding to that of the slot of the plant pot.

The labelling flag is advantageously manufactured from a moisture-resistant material, e.g. plastics.

The bottom of the plant pot is provided with a raised portion, advantageously formed as a diametrically oriented ridge, extending all the way across the bottom of the pot and ending into the sidewall surface of the pot. In an alternative embodiment the bottom has a raised portion formed as a cross, in which two diametrically oriented ridges are positioned perpendicular to each other and all the branches of the cross end into the side wall surface of the pot. The raised portion of the bottom is oriented in relation to the slot of the plant pot. The purpose of this is to orient the plant pot for mechanical attachment of the labelling flag.

In what follows there will be described a non-limiting example of a preferred embodiment which is visualized in the accompanying drawings, in which:

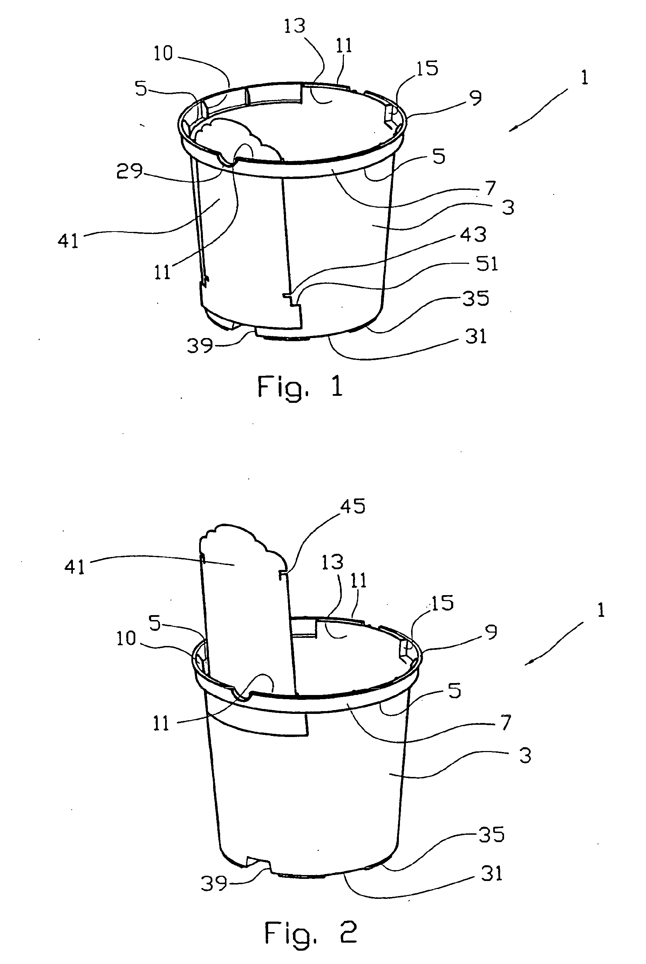

Figure 1 shows a plant pot in a side view with a labelling flag in the transport position;
Figure 2 shows, in the same perspective as in Figure 1, the plant pot with the labelling flag in the exposure position;

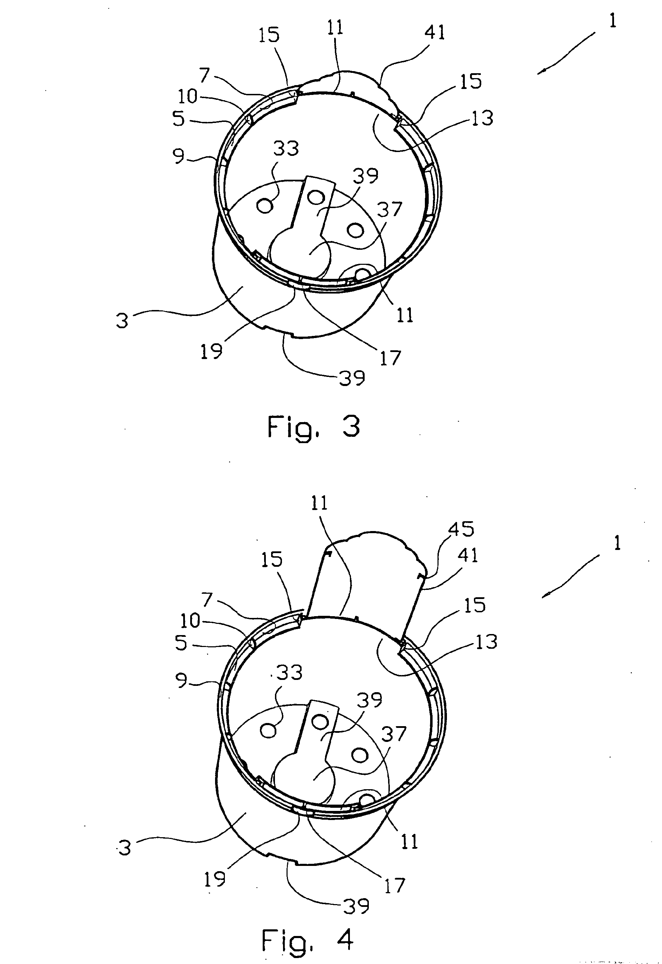

Figure 3 shows the plant pot in a top view, with the labelling flag in the transport position;
Figure 4 shows, in the same perspective as in Figure 3, the plant pot with the labelling flag in the exposure position;

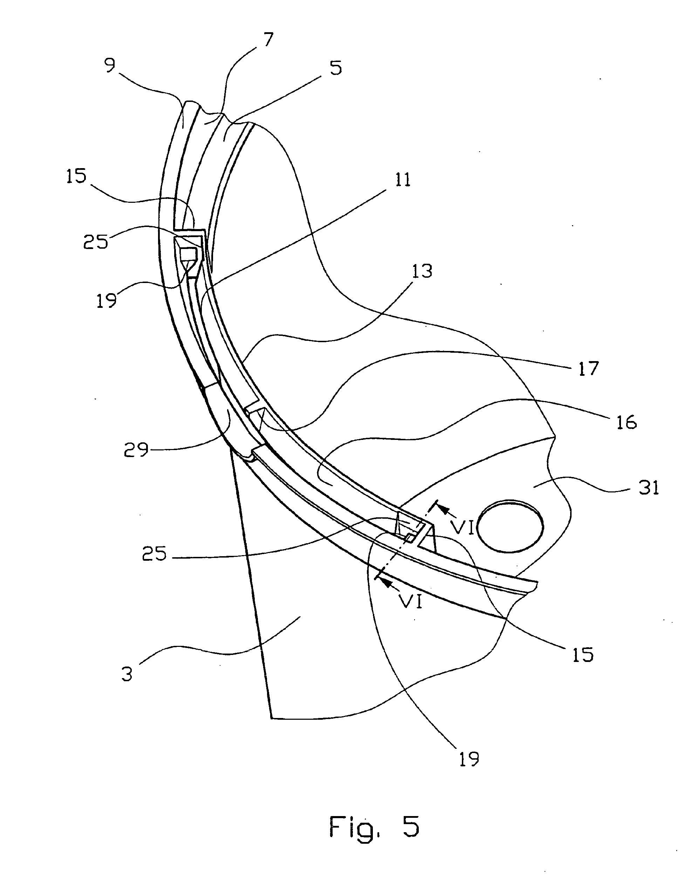

Figure 5 shows, on a larger scale, a section of a plant pot round the slot for the labelling flag;

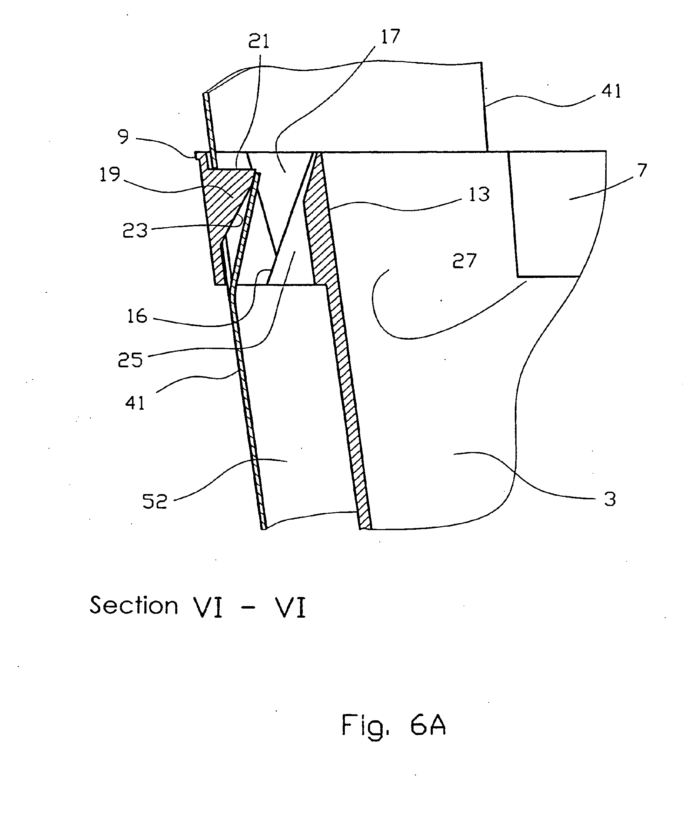

Figure 6A shows a vertical section VI-VI through a pot wall with the labelling flag placed in a lower transport position in the slot;

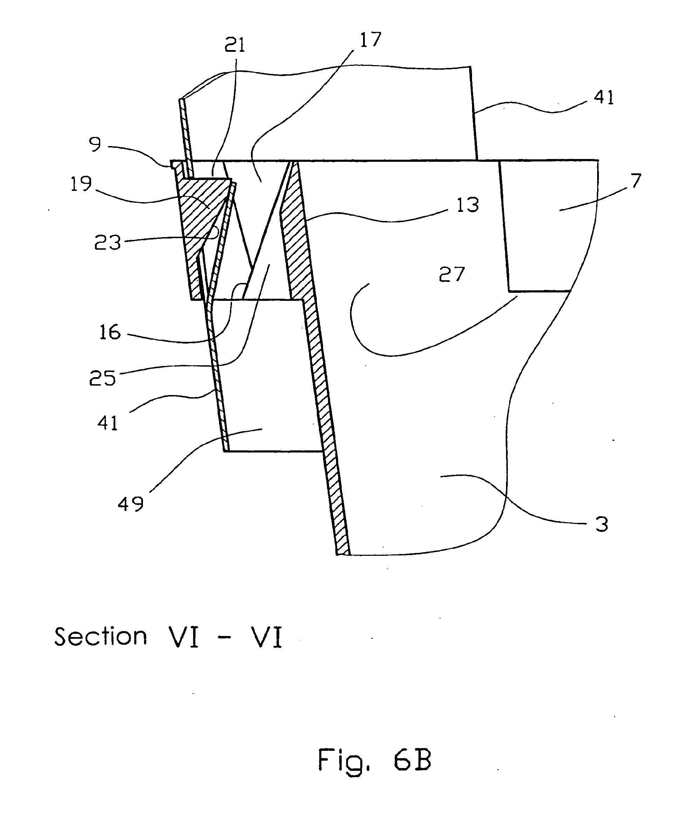

Figure 6B shows the same vertical section VI-VI as Figure 6A, but with the labelling flag placed in an upper exposure position in the slot;

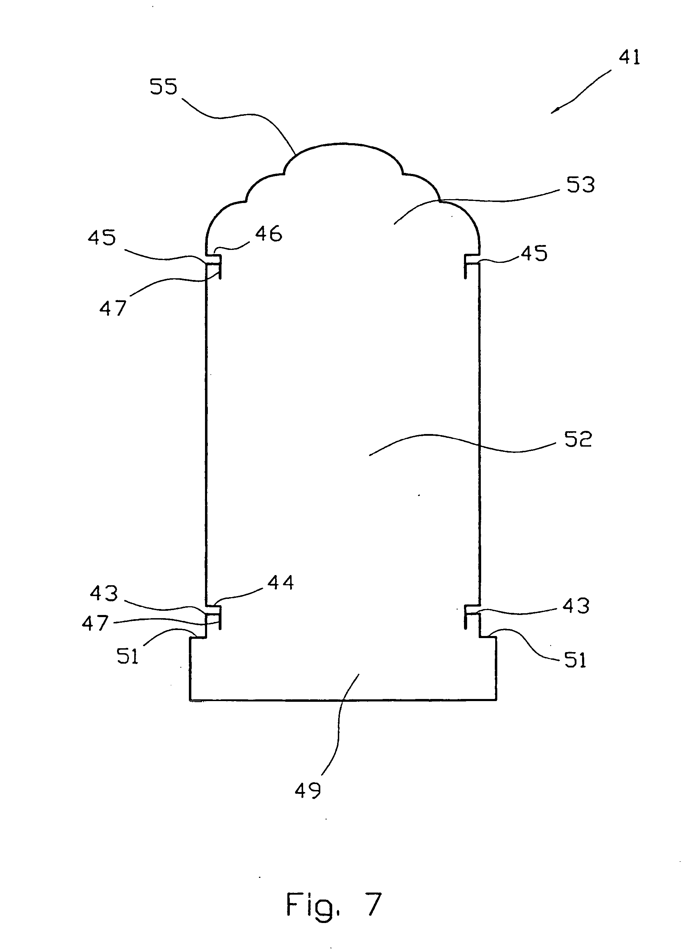

Figure 7 shows a labelling flag in a front/rear view.

In the drawings the reference numeral 1 defines a conically shaped plant pot with a pot wall 3, an approximately horizontal, annular projection 5 and a collar wall 7 extending upwards in approximately the same direction as the pot wall 3. At its top the collar wall 7 terminates in a small, approximately horizontal flange 9 projecting outwards. The collar wall 7 is braced internally with several ribs 10 evenly spaced round the major part of the periphery of the plant pot 1 and connected to the projection 5.

Two diametrically opposite slots 11 penetrate the projection 5. The slot 11 is defined by the inner wall surface of the collar wall 7. The width of the slot 11 constitutes about half the radial extent of the projection 5. In the entire length of the slot 11 and along its inner edge runs a slot wall 13 which is a direct vertical extension of the pot wall 3 of the pot 1. At both ends of the slot 11 an approximately vertical sidewall 15 extends upwards. The sidewalls 15 tightly abut the slot wall 13 and the collar wall 7. The sidewalls 15 and the slot wall 13 extend just as high as the collar wall 7 with its flange 9.

The external wall surface 16 of the slot wall 13, that is the wall surface facing away from the centre of the plant pot 1, extends in the major part of its horizontal extent in an outward slope from its upper edge.

At the centre of the slot wall 13 a vertical wedge-shaped guide fin 17 projects radially from the wall surface 16.

At the sidewalls 15 of the slot 11 an approximately wedge-shaped detent 19 projects radially from the collar wall 7. The upper surface 21 of the detent 19 is approximately horizontal, whereas its inward-facing side surface 23 drops at an outward angle until it meets the collar wall 7 at the downward edge of the detent 19.

Right opposite the detents 19, the downward-sloping wall surface 16 has a vertical recess 25. The outward wall surface 27 of the recess 25 is approximately parallel to the pot wall 3. The horizontal extent of the recess 25 is approximately twice the width of the detent 19.

Right opposite the guide fin 17 the collar wall 7 is provided with a semicircular recess 29. The flange 9 of the collar wall 7 uninterruptedly follows the profile of the recess 29.

The bottom portion 31 of the plant pot 1 comprises several vents 33 and spacing ribs 35. From the bottom side of the bottom portion 31 a centrically positioned, tapered recess 37 projects upwards. From this, two diametrical recesses 39 of a trapezoidal cross-section extend out through the pot wall 3.

An essentially rectangular, thin-walled labelling flag 41 is provided with two pairs of recesses 43, 45. The recesses 43, 45 are of a width corresponding to at least the width of the detents 19. An upper recess edge 44, 46 is approximately perpendicular to the side edge of the labelling flag. From the inner boundary of the recesses 43, 45 a vertical slot 47 through the flag wall extends downwards in a length corresponding to about the double height of the recesses. The lower portion 49 of the labelling flag 41 has a width that is larger than the middle and upper sections 52, 53 of the labelling flag. The lower flag portion 49 thereby forms two upward-facing stop edges 51.

The upper portion 53 of the flag has an upper edge 55 with a multipart arch form.

In the labelling of a pot plant the labelling flag 41 is provided with relevant information (sort name, cultivation tips, bar code, price information etc.) on one or two sides of the middle and upper portions 52, 53 of the labelling flag.

The flag 41 is then inserted with its upper edge 55 into the slot 11 from the underside of the collar 5. Thereby the side edges of the flag 41 are forced inwards by the sloping side surface 23 of the detents 19 into the recesses 29, so that the labelling flag 41 is given space to be passed through the slot 11. As the upper edge 46 of the upper recesses 45 passes the upper edge of the detent 19, the part of the side edge of the labelling flag 41 positioned above the detent 19 straightens, the slot 47 ensuring that only the side edge portion right opposite the detent 19 is being kept pressed in. Thereby attempts to pull the labelling flag 41 down and out of the slot 11 will be prevented by the upper edge 46 of the recess 45 bearing on the horizontal upper surface 21 of the detent 19. The labelling flag 41 now stands in its transport position.

By passing the labelling flag 41 further upwards in the slot 11 until the upper edge 44 of the recesses 43 has passed the detents 19, the labelling flag 41 is retained in the same way as described above, in an exposure position.

The guide fin 17 forces the middle area of the labelling flag 41 outwards towards the collar wall 7, so that the labelling flag 41 can easily be gripped when the flag 41 stands in the transport position with its upper portion 53 accessible at the recess 29.

Only by deformation of the labelling flag 41 at the portions round the recesses 43, 45 or by the time-consuming application of a thin object, for example a knife blade, in order to guide the upper edge of the recesses 43, 45 over the edge of the upper surface 21 of the detent 19, can the labelling flag 41 be removed from the plant pot.

In mechanical automated insertion of the labelling flag 41 the plant pot 1 is oriented in a device (not shown) suitable therefore by means of the diametrical recesses 39 in the bottom portion 31.

## Claims

1. A plant pot device (1) provided with a labelling flag (41), the plant pot (1) comprising one or more slots (11), each surrounded by one or more guide means (13, 15) and also comprising one or more detents (19), **characterized in that** said slots(s) (11), guide means (13, 15) and detents (19) are arranged to receive the labelling flag (41) and lock said labelling flag (41) in a lower position and in an upper positionas the labelling flag (41) is advanced vertically and upwards through the slot (11) and guide means (13, 15).

2. A device in accordance with claim 1, **characterized in that** the side edges of the labelling flag (41) are provided with recesses (43, 45), wherein an upper recess edge (44, 46) is suitable for, in cooperation with a slot (47), being passed onto an upper surface (21) of the detent (19) as the labelling flag (41) is advanced vertically and upwards through the slot (11) and guide means (13,15).

3. A device in accordance with claim 1, **characterized in that** the slot (11), guide means (13, 15) and detents (19) are placed at the outside of a pot wall (3).

4. A device in accordance with claim 1, **characterized in that** the slot (11), guide means (13, 15) and detents (19) are positioned at the inside of the pot wall (3).

5. A device in accordance with claim 1, **characterized in that** the slot (11), guide means (13, 15) and detents (19) are placed at a projection (5) in the upper portion of the plant pot (1).

6. A device in accordance with claim 1, **characterized in that** the labelling flag (41) is provided with one or more stop edges (51), bearing, when the labelling flag (41) has been passed to its upper position, on the guide means (13, 15) and being suitable for preventing the labelling flag (41) from being pulled upwards and out of the slot (11) and guide means (13, 15).

## Patentansprüche

1. Mit einem Bezeichnungsetikett (41) versehene Pflanzentopfvorrichtung (1), wobei der Pflanzentopf (1) einen oder mehrere Schlitze (11), die jeweils von einer oder mehreren Führungseinrichtungen (13, 15) umgeben sind, und eine oder mehrere Arretierungen (19) aufweist, **dadurch gekennzeichnet, daß** der oder die Schlitz(e) (11), Führungseinrichtungen (13, 15) und Arretierungen (19) dazu ausgelegt sind, das Bezeichnungsetikett (41) aufzunehmen, und das Bezeichnungsetikett (41) in einer unteren Position und in einer oberen Position festzustellen, wenn das Bezeichnungsetikett (41) vertikal und nach oben durch den Schlitz (11) und die Führungseinrichtungen (13, 15) geschoben wird.

2. Vorrichtung nach Anspruch 1, **dadurch gekennzeichnet, daß** die Seitenkanten des Bezeichnungsetiketts (41) mit Ausnehmungen (43, 45) versehen sind, wobei eine obere Ausnehmungskante (44, 46) dazu geeignet ist, in Zusammenwirkung mit einem Schlitz (47) auf eine obere Fläche (21) der Arretierung (19) gelegt zu werden, wenn das Bezeichnungsetikett (41) vertikal und nach oben durch den Schlitz (11) und die Führungseinrichtungen (13, 15) geschoben wird.

3. Vorrichtung nach Anspruch 1, **dadurch gekennzeichnet, daß** der Schlitz (11), die Führungseinrichtungen (13, 15) und die Arretierungen (19) auf der Außenseite einer Topfwand (3) angeordnet sind.

4. Vorrichtung nach Anspruch 1, **dadurch gekennzeichnet, daß** der Schlitz (11), die Führungseinrichtung (13, 15) und die Arretierungen (19) an der Innenseite der Topfwand (3) angeordnet sind.

5. Vorrichtung nach Anspruch 1, **dadurch gekennzeichnet, daß** der Schlitz (11), die Führungseinrichtung (13, 15) und die Arretierungen (19) an einem Vorsprung (5) im oberen Abschnitt des Pflanzentopfs (1) angeordnet sind.

6. Vorrichtung nach Anspruch 1, **dadurch gekennzeichnet, daß** das Bezeichnungsetikett (41) mit einem oder mehreren Begrenzungskanten (51) versehen ist, die auf den Führungseinrichtungen (13, 15) aufliegen, wenn das Bezeichnungsetikett (41) in seine obere Position gebracht wurde, und die dazu ausgelegt sind, das Bezeichnungsetikett (41) daran zu hindern, nach oben und aus dem Schlitz (11) und den Führungseinrichtungen (13, 15) herausgezogen zu werden.

## Revendications

1. Dispositif, pour un pot de fleur (1),équipé d'un panneau d'étiquetage (41), le pot de fleur (1) comprenant une ou plusieurs fentes (11), chacune entourée par un ou plusieurs moyens de guidage (13,15) et comprenant en outre un cran d'arrêt (19) ou plus, **caractérisé en ce que** lesdits fente(s) (11), moyen(s) de guidage et cran(s) d'arrêt sont disposés pour recevoir le panneau d'étiquetage (41) et verrouiller ledit panneau d'étiquetage (41) dans une position basse et dans une position haute lorsque le panneau d'étiquetage (41) est déplacé verticalement et vers le haut à travers la fente (11) et le(s) moyen(s) de guidage (13,15).

2. Dispositif selon la revendication 1, **caractérisé en ce que** les bords latéraux du panneau d'étiquetage (41) sont équipés d'encoches (43,45) et dans lequel un bord supérieur d'encoche (44,46) est adapté pour, en coopération avec une fente (47), être passée sur une surface supérieure (21) du cran d'arrêt (19) lorsque le panneau étiquetage (41) est déplacé verticalement et vers le haut à travers la fente et le(s) moyens(s) de guidage (13,15).

3. Dispositif selon la revendication 1, **caractérisé en ce que** la fente (11), le(s) moyen(s) de guidage (13,15) et le cran d'arrêt (19) sont disposés sur l'extérieur d'une paroi (3) d'un pot.

4. Dispositif selon la revendication 1, **caractérisé en ce que** la fente (11), le(s) moyen(s) de guidage (13,15) et le cran d'arrêt (19) sont positionnés sur l'intérieur d'une paroi (3) du pot.

5. Dispositif selon la revendication 1, **caractérisé en ce que** la fente (11), le(s) moyen(s) de guidage (13,15) et le cran d'arrêt (19) sont disposé sur une extension (5) dans la partie supérieure du pot de fleur (1).

6. Dispositif selon la revendication 1, **caractérisé en ce que** le panneau d'étiquetage (41) est équipé avec un, ou plus, bords d'arrêt (51), en appui, lorsque le panneau d'étiquetage (41) a été déplacé jusqu'à sa position supérieure, sur les moyens de guidage (13,15) et étant adapté pour éviter que le panneau d'étiquetage (41) ne soit tiré vers le haut et en dehors de la fente (11) et des moyens de guidage (13,15).
